# EUROPEAN PATENT SPECIFICATION

(11) **EP 0 483 956 B1**
(45) Date of publication and mention of the grant of the patent: **08.01.1997**
(21) Application number: 91307765.7
(22) Date of filing: 23.08.1991
(51) Int. Cl.: H04B 1/38, H04B 1/08, H04B 1/40

(54) **Combined broadcast radio receiver and radio telephone**
Kombinierters Rundfunkempfänger- und Funktelefongerät
Combinaison d'un radiorécepteur et d'un radiotéléphone

(30) Priority: 30.10.1990 GB 9023608
(43) Date of publication of application: 06.05.1992
(73) Proprietor: NOKIA MOBILE PHONES (U.K.) LIMITED, Camberley, Surrey GU15 3SP (GB)
(72) Inventor: Martensson, Nils Erik, Woking, Surrey GU22 0QG (GB); Wilkins, Roger, Basingstoke, Hants RG24 9LR (GB)
(74) Representative: Frain, Timothy John

(56) References cited:
- US-A- 4 045 739
- US-A- 4 060 766
- US-A- 4 090 134
- SPEECH TECHNOLOGY vol. 3, no. 3, September 1986, NEW YORK,US pages 24 - 28 SCHALK:'Voice Recognition in Cellular Mobile Telephones'

## Description

This invention relates to mobile radio apparatus for installation in a vehicle.

It is common practice for cars and other vehicles to be equipped with an in-car entertainment unit comprising a broadcast radio receiver possibly in combination with other electronic audio entertainment equipment such as, for example an audio cassette player and/or a compact disc player.

In view of standardization in this field, in-car entertainment equipment is generally made in units having substantially the same standard dimensions. Accordingly vehicles are commonly supplied with a purpose-built slot-like mounting recess having complementary dimensions to accommodate and facilitate the installation of a standard-size entertainment unit.

It is also quite common for vehicles to be equipped with mobile radio equipment comprising a transceiver permitting two-way communications. In particular, there is an increasing trend for mobile cellular radio telephones to be installed in vehicles, enabling telephone communication with conventional fixed-wire or other cellular telephones, even when the vehicle is on the move. The transceiver is quite distinct and often remote from the broadcast radio receiver if the latter is present in the vehicle.

Generally a mobile cellular radio comprises a handset and a transceiver unit. Conventionally the handset is connected to the transceiver unit via intermediate means, typically a cradle on which the handset is placed either when the telephone is in the "on-hook" condition or when it is being used in a "handsfree" mode. The cradle is usually mounted within the passenger compartment of the vehicle for ready access to the handset. On the other hand the transceiver unit, which does not need to be immediately accessible and which generally is provided in a somewhat inelegant housing, may be hidden from view in any convenient location within the vehicle, for example in the boot or beneath one of the seats. Nevertheless, the transceiver inevitably presents something of an encumbrance regardless of which conventional mounting location is chosen for it. It is not always easy to find a suitable place in the vehicle to install the transceiver unit.

For the sake of safety, mobile telephones are now commonly adapted to operate in the so-called hands-free mode, i.e. without the need to move the handset from the cradle. The driver of the vehicle is thus able to make and receive calls safely without having to physically pick up and hold the handset. The hands-free facility does, however, require the telephone to be equipped with an external microphone located in the vicinity of the user's mouth, and a separate loudspeaker in a fixed position enabling the incoming speech to be heard clearly by the user within the vehicle.

In prior art mobile telephones the hands-free loudspeaker has been mounted integrally within the cradle member behind a grille provided in an external wall thereof.

US 4,090,134, US 4,060,766 and US 4,045,739 describe combined radio broadcast receivers and radio transceivers.

British patent GB 1,504,576 relates to a combined radio broadcast receiver and walkie-talkie comprising a fixed frequency transmitter and receiver circuit and a further receiver circuit tunable over a commercial frequency band, the receiver circuits being connectable by way of a common audio frequency amplification circuit to a common loudspeaker.

According to the present invention there is provided a radio apparatus comprising a broadcast radio receiver and a cellular radio telephone transceiver arranged integrally with the broadcast radio in a common housing for mounting in a recess provided in a vehicle, said recess being intended for accommodating a standard in-car audio entertainment unit, and means responsive to the cellular radio telephone being in the off-hook condition for muting the broadcast radio receiver, the broadcast radio receiver and the cellular radio telephone transceiver sharing common circuitry.

A combined broadcast radio and mobile radio telephone in accordance with the invention has the advantage that the transceiver of the radio telephone can be accommodated in the same purpose-built recess provided in the vehicle dashboard or elsewhere for mounting a standard, conventional in-car entertainment unit per se. The transceiver therefore occupies no additional space within the vehicle, i.e. in the passenger compartment or in the boot and also does not present an obstacle inside the vehicle since it can be completely accommodated and concealed within the same (otherwise unusable) space normally occupied by the in-car entertainment unit alone.

Suitably the broadcast radio receiver and the mobile radio telephone transceiver are present in a common housing. This arrangement facilitates installation of a combined broadcast radio and radio telephone in a vehicle.

The broadcast radio receiver and radio telephone transceiver share common circuitry, i.e. one or more individual components which may be functionally related.

In a preferred embodiment the mobile radio telephone transceiver and the broadcast radio receiver share the same loudspeaker(s) and, optionally, common audio frequency amplifying means. This dispenses with the need to provide an additional, dedicated loudspeaker and audio frequency amplifier circuitry for use with the telephone in the handsfree mode, as was the case in the prior art.

Furthermore, means may be provided for selectively muting the broadcast radio receiver. Means may also be provided for sensing when the radio telephone is in use, the muting means being responsive to said sensing means. Thus the broadcast radio receiver, if it is itself in use, can be muted automatically whenever the telephone is in or comes into use.

Suitably, voice activation means may be provided for enabling selected functions of the broadcast radio receiver and/or the mobile radio telephone by spoken command. For example, voice dialling may be included whereby the user can dial a telephone number by reciting the digits or a particular word or phrase indicative of the desired telephone number (e.g. "OFFICE").

Additionally means may be included for recording and/or playing back audio messages for use as a dictation facility and/or as an automatic telephone answering apparatus.

An embodiment of the invention will now be described, by way of example, with reference to the accompanying drawing, in which:-
Figure 1 is a schematic diagram of a combined broadcast radio receiver and mobile radio telephone transceiver for mounting in a vehicle in accordance with the invention, and
Figure 2 is a schematic perspective view of the radio apparatus in accordance with the present invention and showing a mounting recess in a vehicle.

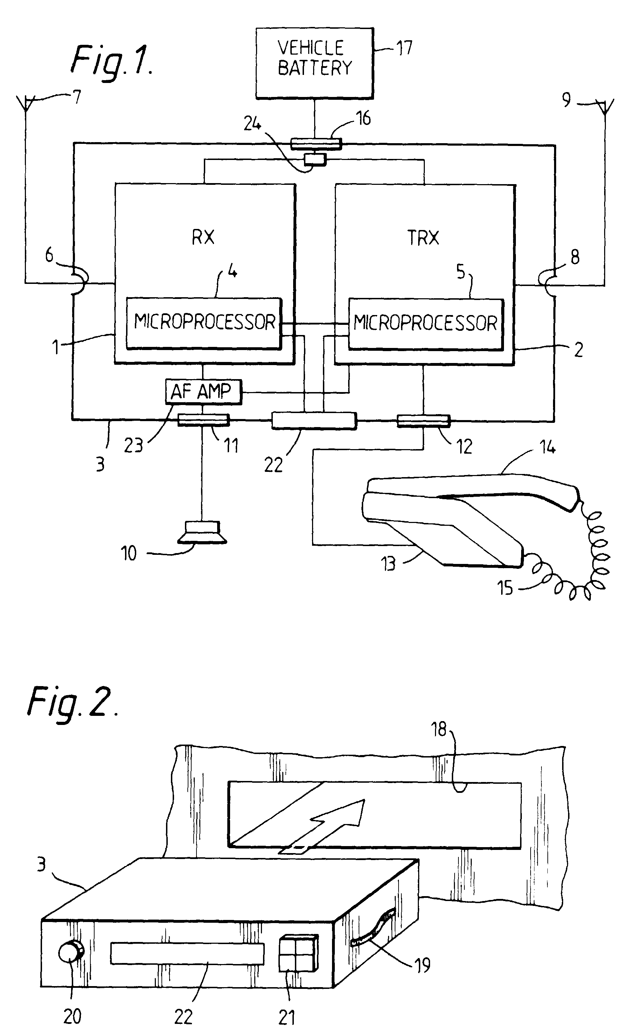

Figure 1 shows a combined radio apparatus comprising both a broadcast entertainment radio receiver 1 and a transceiver 2 of a cellular radio telephone. The housing is made of a conductive material. The constitution of the receiver and transceiver circuitry is conventional in its own right and no further details need be given here except to say that the functions of the radio receiver 1 are under the control of a microprocessor 4 and the radio telephone functions are under the control of a microprocessor 5.

The entertainment radio receiver 1 is coupled via antenna connector 6 on the housing 3 to a remote antenna commonly mounted externally on the vehicle. The transceiver 2 is likewise coupled via antenna connector 8 on the housing 3 to a dedicated remote antenna 9 again usually mounted externally on the vehicle. It is noted here that an antenna combiner, itself well-known in the art, may be used whereby a common antenna cable may be employed. Alternatively dual frequency band antennas are known which operate both at the broadcast radio receive frequency and the mobile telephone transmit and receive frequencies, and such a dual frequency band antenna may be used in the present application.

Both the radio receiver 1 and the transceiver 2 are coupled to a common audio frequency amplifying circuit 23 which in turn is coupled via connector 11 on the housing 3 to a common external loudspeaker suitably mounted within the passenger compartment of the vehicle. In practice, as is well known, two or more loudspeakers may be employed in the case of stereo reception. In this case the transceiver may share one or more of the complete set of loudspeakers. It is increasingly common nowadays for loudspeakers to be included in the vehicle during assembly of the vehicle, i.e. by the vehicle manufacturer. Common locations for the loudspeakers are the front doors, the dashboard, and the rear parcel shelf.

The transceiver 2 is also coupled via connector 12 to a cradle 13 for releasably holding a mobile telephone handset 14. The handset is connected to the cradle, as is conventional, by a spiral cord 15. The cradle is fixedly mounted in the vehicle, for example to the central console or the dashboard, or in any other convenient locations so that the handset is readily accessible to the driver and/or passenger(s).

The receiver 1 and transceiver 2 are coupled via a common filter 24 and connector 16 to a common power supply namely the vehicle battery 17.

Figure 2 shows how the radio housing 3 may be inserted into a complementary aperture 18 provided in, for example, the dashboard fascia or central console of the vehicle.

The side faces of the radio housing may be provided with means such as leaf springs 19 to help secure the radio unit in the mounting recess.
The radio unit may be provided with a conventional user interface comprising control knobs 20 and/or keys 21 and a visual display 22 associated only with the operation of the broadcast radio receiver because the controls and display for the telephone may all be provided on the handset 14 in the usual manner. Alternatively the display 22 may be shared by both the broadcast receiver 1 and the mobile telephone transceiver 2 in which case the common display 22 is addressed under the control of the respective microprocessor 4 and 5, as shown in Figure 1.

The various connectors 6,8,11,12,16 on the radio housing 3 mentioned above are preferably all provided in the rear face of the housing. The respective complementary connections may be provided either on free (flying) leads for manual connection by the installer, or may be provided in a fixed docking arrangement so as to mate automatically with the respective connector on the housing 3 when the housing is inserted fully into the recess 18.

As shown in Figure 1 the respective microprocessors 4 and 5 of the receiver 1 and transceiver 2 can communicate with each other so that when the telephone is in the off-hook condition and possibly also when an incoming call is detected the microprocessor 4 causes the broadcast radio receiver 4 to be muted or silenced automatically, for example, by disconnecting the broadcast receiver 1 from the audio frequency amplifying circuit 23. The signal from the receiver 4 to the loudspeaker 10 may be returned to the pre-selected level under the control of the microprocessors 4 and 5 when the telephone is no longer in use.

In view of the foregoing it will be evident to a person skilled in the art that various modifications may be made within the scope of the invention. For example the broadcast radio receiver and the radio telephone transceiver may share common circuitry. Particularly in the case of digital signal processing substantial commonality may be achieved.

A fully integrated vehicle entertainment and communication system may comprise, in addition to the combined radio apparatus already described, other peripherals such as, for example, an audio cassette player which may be utilized not only for playing entertainment cassette tapes but also as an answering machine for playing back a pre-recorded announcement over the telephone. The cassette player may also be adapted to record in-coming messages received by the telephone and/or for recording messages dictated from within the vehicle, i.e. in the manner of a regular office dictation machine. Any or all of these functions may be enabled by manual switches or by voice activation. For example the spoken command "DICTATION" may activate the recording mode of the cassette apparatus, whereby the user can commence hands-free dictation. In response to another spoken command, for example "END OF DICTATION" the recording stops. Other voice activated commands may be given, such as "REWIND" to rewind the cassette tape, or "ANSWERING MACHINE" to enable the answering machine functions associated with the telephone. Voice activation may also be used to activate the various functions of the entertainment radio to the mobile telephone. Hence the spoken command "RADIO STATION 1" will automatically select a pre-set channel designated as "station 1". As far as the telephone is concerned, voice dialling may be utilized where the user either speaks each individual digit of the telephone number to be dialled, or uses a short form of command stored in memory within the telephone, such as "OFFICE" or "HOME". The advantage of voice activation and voice dialling is that the full range of facilities and functions of the integrated entertainment/communications system can be used entirely safely in hands-free mode within the vehicle environment.

## Claims

1. A radio apparatus comprising a broadcast radio receiver and a cellular radio telephone arranged integrally with the broadcast radio in a common housing (3) for mounting in a recess (18) provided in a vehicle, said recess being intended for accommodating a standard in-car audio entertainment unit, and means responsive to the cellular radio telephone being in the off-hook condition for muting the broadcast radio receiver, the broadcast radio receiver and the cellular radio telephone transceiver sharing common circuitry.

2. A radio apparatus as claimed in any of the preceding claims, wherein the broadcast radio receiver and the cellular radio telephone transceiver are coupled to at least one common loudspeaker (10).

3. A radio apparatus as claimed in claim 1, wherein the broadcast radio receiver and the cellular telephone transceiver are coupled to at least one common loudspeaker via common audio frequency amplifying means (23).

4. A radio apparatus as claimed in any of the preceding claims, including voice activation means for enabling selected functions of the broadcast radio receiver and/or the cellular radio telephone by oral command.

5. A radio apparatus as claimed in any of the preceding claims, further including means for recording and/or playing back audio messages.

6. A radio apparatus as claimed in claim 9, wherein the recording and/or playback means is adapted to operate as an answer machine for the cellular telephone.

7. A radio apparatus as claimed in any preceding claim wherein the shared common circuitry comprises a display.

8. A radio apparatus as claimed in any of the preceding claims, wherein the muting means mutes the broadcast radio receiver responsive to detection of an incoming call."

## Patentansprüche

1. Funkapparat mit einem Rundfunkempfänger und einem zellularen Funktelefon, welches zusammen mit dem Rundfunkradio in einem gemeinsamen Gehäuse (3) integriert ist, welches in einem Einbauschacht (18) eines Fahrzeugs montierbar ist, der für den Einbau einer Standardautoradio-Unterhaltungseinheit verwendet werden kann, und mit Mitteln, die auf das im nicht aufgelegten Zustand befindliche Funktelefon reagieren, um den Rundfunkempfänger stumm zu schalten, wobei sich der Rundfunkempfänger und der zellulare Funktelefontransceiver einen gemeinsamen Schaltkreis teilen.

2. Funkapparat nach Anspruch 1, **dadurch gekennzeichnet**, daß der Rundfunkempfänger und der Transceiver des zellularen Funktelefons an mindestens einen gemeinsamen Lautsprecher (10) gekoppelt sind.

3. Funkapparat nach Anspruch 1, **dadurch gekennzeichnet**, daß der Rundfunkempfänger und der Transceiver des Funktelefons über einen gemeinsamen Tonfrequenzverstärker (23) mit mindestens einem gemeinsamen Lautsprecher gekoppelt sind.

4. Funkapparat nach irgendeinem der vorangegangenen Ansprüche, **gekennzeichnet durch** Sprache aktivierbare Mittel zum Einschalten ausgewählter Funktionen des Rundfunkempfängers und/oder des zellularen Funktelefons mittels Sprachkommandos.

5. Funkapparat nach irgendeinem der vorangegangenen Ansprüche, weiter **gekennzeichnet durch** Mittel zur Aufnahme und/oder Wiedergabe von Audionachrichten.

6. Funkapparat nach Anspruch 5, **dadurch gekennzeichnet**, daß die Mittel zur Aufnahme und/oder Wiedergabe als Anrufbeantworter für das zellulare Telefon verwendet werden können.

7. Funkapparat nach irgendeinem der vorangegangenen Ansprüche, **dadurch gekennzeichnet**, daß der gemeinsam geteilte Schaltkreis eine Anzeige enthält.

8. Funkapparat nach irgendeinem der vorangegangenen Ansprüche, **dadurch gekennzeichnet**, daß die Mittel zur Stummschaltung des Rundfunkempfängers auf die Detektion eines eintreffenden Anrufs reagieren.

## Revendications

1. Appareil radio comportant un récepteur radio et un radiotéléphone cellulaire disposé intégralement avec la radio dans un boîtier commun (3) pour le montage dans un réceptacle (18) prévu dans un véhicule, ledit réceptacle étant supposé accueillir un autoradio standard, et un moyen répondant au radiotéléphone cellulaire dans la condition de décrochage pour couper la sortie du récepteur radio, le récepteur radio et l'émetteur-récepteur de radiotéléphone cellulaire partageant une circuiterie commune.

2. Appareil radio selon la revendication précédente, dans lequel le récepteur radio et l'émetteur-récepteur de radiotéléphone cellulaire sont couplés à au moins un haut-parleur commun (10).

3. Appareil radio selon la revendication 1, dans lequel le récepteur radio et l'émetteur-récepteur de téléphone cellulaire sont couplés à au moins un haut-parleur commun via un moyen d'amplification de fréquence audio commun (23).

4. Appareil de radio selon l'une quelconque des revendications précédentes, comportant un moyen d'activation vocal, pour activer des fonctions sélectionnées du récepteur radio et/ou du radiotéléphone cellulaire par commande orale.

5. Appareil radio selon l'une quelconque des revendications précédentes, comprenant en outre un moyen pour l'enregistrement et/ou le playback de messages audio.

6. Appareil radio selon la revendication 5, dans lequel le moyen d'enregistrement et/ou de playback est adapté pour fonctionner comme un répondeur téléphonique pour le téléphone cellulaire.

7. Appareil radio selon l'une quelconque des revendications précédentes, dans lequel la circuiterie commune partagée comporte un affichage.

8. Appareil radio selon l'une quelconque des revendications précédentes, dans lequel le moyen de sourdine coupe l'émission du récepteur radio en réponse à la détection d'un appel de l'extérieur.
